# EUROPEAN PATENT APPLICATION

(11) **EP 3 620 749 A1**
(43) Date of publication of application: **11.03.2020**
(21) Application number: 19183468.8
(22) Date of filing: 28.06.2019
(51) Int. Cl.: G01C 19/72

(54) **APPARATUS AND METHOD FOR DIMINISHED BIAS ERROR DUE TO POLARIZATION MISMATCH**

(30) Priority: 04.09.2018 US 201816121311
(71) Applicant: Honeywell International Inc. Intellectual Property - Patent Services, Morris Plains, NJ 07950 (US)
(72) Inventor: KRUEGER, Neil A., Morris Plains, NJ 07950 (US); QIU, Tiequn, Morris Plains, NJ 07950 (US); STRANDJORD, Lee K., Morris Plains, NJ 07950 (US); SANDERS, Glen A., Morris Plains, NJ 07950 (US)
(74) Representative: LKGlobal UK Ltd.

(57) **Abstract**

A method is provided. The method comprises: receiving a first optical signal and a second optical signal; injecting the first optical signal into an optical resonator so that the first optical signal propagates in a first direction through the optical resonator; injecting the second optical signal into the optical resonator so that the second optical signal propagates in a second direction through the optical resonator, which is opposite to the first direction; filtering an optical signal propagating in the first direction of the optical resonator with a first common polarizer having the first polarization; and filtering an optical signal propagating in the second direction of the optical resonator with the first common polarizer.

## Description

### BACKGROUND

Resonant fiber optic gyroscopes (RFOGs) have better signal to noise sensitivity for rotation sensing ("rotation sensitivity") for a given diameter than laser ring gyroscopes and interferometer fiber optic gyroscopes. Thus, RFOGs are desirable because a given level of rotation sensitivity can be achieved with smaller RFOGs, reducing the size of inertial navigation systems incorporating RFOGs. RFOGs, however, are susceptible to bias error because of imperfections in RFOG optical components and parameter mismatches between RFOG signals.

One source of bias error is polarization mismatch between the polarization Eigenstate inside a resonator of the RFOG, and the polarization of light being injected into the resonator of the RFOG. A pair of polarizers is used to polarize light circulating in the resonator and light injected into the resonator, e.g. in each of the clockwise and counter-clockwise paths. Polarization mismatch arises because of differences of polarization of the polarizers within a pair. The differences may arise due to variations in manufacturing of each of the pair of polarizers, and their installation in the RFOG.

U.S. Patent Application 15/871,709 (the '709 Application) filed on January 15, 2018 discloses techniques for reducing polarization mismatch. The '709 Application is hereby incorporated by reference in its entirety. However, the apparatus disclosed in the '709 Application uses two polarizers in the optical path of the resonator. If the two polarizers are misaligned with respect to one another, polarization mismatch still occurs. Therefore, there remains a need to reduce polarization mismatch.

### SUMMARY

A method is provided. The method comprises: receiving a first optical signal and a second optical signal; injecting the first optical signal into an optical resonator so that the first optical signal propagates in a first direction through the optical resonator; injecting the second optical signal into the optical resonator so that the second optical signal propagates in a second direction through the optical resonator, which is opposite to the first direction; filtering an optical signal propagating in the first direction of the optical resonator with a first common polarizer having the first polarization; and filtering an optical signal propagating in the second direction of the optical resonator with the first common polarizer.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 illustrates a block diagram of one embodiment of a resonant fiber optic gyroscope with an optical processing system with at least one common polarizer;
Figure 2A illustrates one embodiment of the optical processing system with at least one common polarizer;
Figure 2B illustrates another embodiment of an optical processing system with at least one common polarizer;
Figure 2C illustrates a further embodiment of an optical processing system with at least one common polarizer;
Figure 2D illustrates yet another embodiment of an optical processing system with at least one common polarizer; and
Figure 3 illustrates an exemplary method of diminishing bias error in a resonant fiber optic gyroscope.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

A resonant fiber optic gyroscope (RFOG) with a single polarizer in the optical path of a resonator (and optionally a single polarizer in the paths of optical signals provided to and received from the resonator) may be used to overcome the above reference problem. As a result, polarization mismatch and corresponding bias error is reduced. Additionally, the techniques described herein reduce the number of optical components, such as half wave plates and Faraday rotators, required to implement the RFOG.

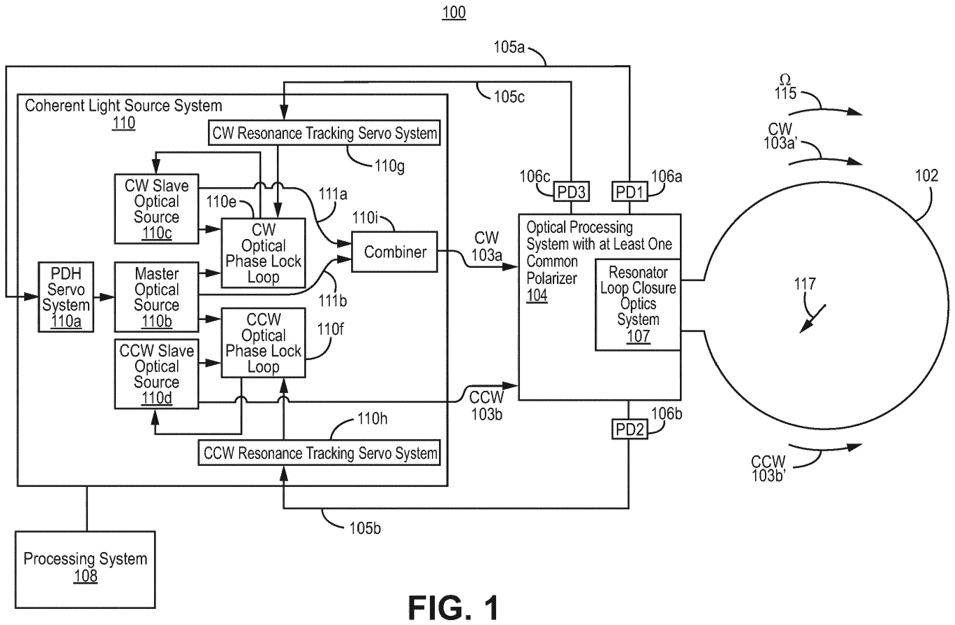

Figure 1 illustrates a block diagram of one embodiment of an RFOG with an optical processing system with at least one common polarizer 100. The embodiment of Figure 1 is but one RFOG architecture in which the present invention can be implemented.

In the illustrated embodiment, the RFOG with an optical processing system with at least one common polarizer 100 includes an optical resonator coil 102, an optical processing system with at least one common polarizer 104, a first photodetector (PD1) 106a, a second photodetector (PD2) 106b, a third photodetector (PD3) 106c, a coherent light source system 110, and a processing system 108. As will be subsequently described, the photodetectors may optionally be part of the optical processing system with at least one common polarizer 104.

The optical resonator coil 102, usually made of optical fiber, is coupled to the optical processing system with at least one common polarizer 104. The optical processing system with at least one common polarizer 104 includes a resonator loop closure optics system 107. An optical resonator comprises the optical resonator coil 102 and the resonator loop closure optics system 107.

In one embodiment, the optical resonator coil 102 is comprised of turns or windings of optical fiber. The first photodetector 106a, the second photodetector 106b, the third photodetector 106c, and the coherent light source system 110 are coupled to optical processing system with at least one common polarizer 104. The optical resonator coil 102 has a first port and a second port respectively coupled, *e.g.* to the subsequently described first optical waveguide and third optical waveguide.

Photodetectors convert incident optical signals into electrical signals. The amplitude of the electrical signal generated by a photodetector is linearly related to the intensity of the incident optical signal. Although three photodetectors are exemplified herein, other embodiments of the RFOG with an optical processing system with at least one common polarizer may have four photodetectors, and the coherent light source system 110 would be alternatively implemented with two Pound-Drever-Hall (PDH) servo systems as illustrated, for example, in US Patent No. 8,947,671 which is incorporated by reference herein in its entirety. The optional fourth photodetector (PD4) is referenced by way of example elsewhere herein. However, in other embodiments of the RFOG with an optical processing system with at least one common polarizer 100 illustrated in Figure 1, the optional fourth photodetector can be used for diagnostic purposes.

In one embodiment, the processing system 108 is a state machine. In another embodiment, the processing system comprises a processor circuitry coupled to memory circuitry. The processing circuitry may be implemented with at least one of a microprocessor, a microcontroller, an application specific integrated circuit, and/or a gate array. The memory circuitry may be implemented by at least one of random access memory, read only memory, Flash memory, magnetic memory such as a hard drive, and/or optical memory such as an optical drive and optical disc. The processing circuitry may execute software and/or firmware stored in the memory circuitry, e.g. to determine angular rate of rotation.

The processing system 108 determines the angular rate of rotation of the optical resonator coil 102 by processing signals from the coherent light source system 110. The memory may include program instructions which are executed by the processor to determine the angular rate of rotation 115 of the optical resonator coil 102 about an input axis 117. The angular rate of rotation 115 is determined by the difference between the resonant frequencies of the optical resonator in the clockwise and counterclockwise directions. This is measured by locking the frequencies, f_{cw} and f_{ccw}, of the clockwise (CW) slave optical signal (or first optical signal) 111a and the counter clockwise (CCW) slave optical signals 103b (or second optical signal) to the CW and CCW resonances, respectively, of the optical resonator comprising the optical resonator coil 102 and the resonator loop closure optics system 107. Thus, the processing system 108 uses a frequency difference, Δf, between the frequency, f_{cw}, of the CW slave optical signal and the frequency, f_{ccw}, of the CCW slave optical signal to derive the rotation rate output of the optical resonator, e.g. the RFOG with an optical processing system with at least one common polarizer 100. The first optical signal 111a is combined with a master optical signal (or second optical signal) 111b in an optical combiner (combiner) 110i prior to being coupled to the optical processing system with at least one common polarizer 104, and then to the optical resonator. The CCW slave optical signal 103b is also coupled to the optical processing system with at least one common polarizer 104, and then the optical resonator. In another embodiment, signals representative of f_{ccw} and f_{cw} are respectively provided by a CCW resonance tracking servo system 110h and a CW resonance tracking servo system 110g in the coherent light source system 110. In a further embodiment, the angular rate of rotation 115 about the input axis 117 is an angular rate of rotation, Ω, 115 where Ω = (λ^{∗}Δf^{∗}P) / (4 ^{∗} A), λ is substantially equal to the average wavelength of the clockwise optical signal 103a and the counter-clockwise light signal 103b. A is the area enclosed by the optical resonator coil 102 and P is the perimeter of the optical resonator path of the optical resonator coil 102 and resonator loop closure optics system 107.

The coherent light source system 110, or components therein, may include components not shown in Figure 1. Such components may be used to amplitude and phase modulate optical signals, and to amplify or split optical signals. In one embodiment, such components include variable optical attenuator(s), intensity modulator(s), phase modulator(s), optical amplifier(s), optical isolator(s), and optical passive device(s).

The coherent light source system 110 generates a clockwise (CW) optical signal 103a and counter-clockwise (CCW) optical signal 103b which are coupled to the optical resonator coil 102 by the optical processing system with at least one common polarizer 104. In one embodiment, the CW optical signal 103a and the CCW optical signal 103b are linearly polarized. In another embodiment, the linearly polarized CW optical signal 103a and the linearly polarized CCW optical signal 103b are each substantially linearly polarized in one direction, e.g. horizontal or vertical, or P and S polarized. The direction of polarization is ideally the same for the linearly polarized CW optical signal 103a and the linearly polarized CCW optical signal 103b. Polarized CW optical signal 103a' and polarized CCW optical signal 103b' propagate respectively clockwise and counter-clockwise around the optical resonator coil 102.

The optical processing system with at least one common polarizer 104 generates optical feedback signals which are converted to electrical feedback signals by the first photodetector 106a, the second photodetector 106b, and the third photodetector 106c. The first photodetector 106a, the second photodetector 106b, and the third photodetector 106c respectively generate a first feedback signal 105a, a second feedback signal 105b, and a third feedback signal 105c which are coupled to the coherent light source system 110.

In the illustrated embodiment, the coherent light source system 110 comprises a PDH servo system 110a, a CW slave optical source 110c, a master optical source 110b, a CCW slave optical source 110d, a CW resonance tracking servo 110g, a CW optical phase lock loop 110e, a CCW optical phase lock loop 110f, a CCW resonance tracking servo system 110h, and an optical combiner (combiner) 110i. The PDH servo system 110a is configured to receive a first feedback signal 105a, and is coupled to the master optical source 110b and the first photodetector 106a. The CW resonance tracking servo 110g is configured to receive the third feedback signal 105c, and is coupled to the CW optical phase lock loop 110e and the third photodetector 106c. The CW optical phase lock loop 110e is coupled to the CW slave optical source 110c and the master optical source 110b. The CCW resonance tracking servo system 110h is configured to receive the second feedback signal 105b, and is coupled to the CCW optical phase lock loop 110f and the second photodetector 106b. The CCW optical phase lock loop 110f is coupled to the CCW slave optical source 110d and the master optical source 110b.

The optical combiner 110i combines a first optical signal 111a emitted from the CW slave optical source 110c and a second optical signal 111b emitted from the master optical source 110b, and forms the CW optical signal 103a. The CCW slave optical source 110d generates the CCW optical signal 103b.

The first feedback signal 105a and the PDH servo system 110a lock the carrier frequency of the second optical signal 111b emitted by the master optical source 110b to a longitudinal resonant frequency or to a frequency that is offset from a longitudinal resonant frequency of the optical resonator by a fixed frequency (offset frequency). The longitudinal resonant frequency equals q multiplied by a free spectral range (FSR) of the optical resonator, where q is an integer. In some embodiments, the carrier frequency of the second optical signal 111b is locked to q times FSR, or in some embodiments it is locked to (q + ½) ^{∗} FSR. The difference between the longitudinal resonance frequency (or resonance frequency) and the corresponding carrier frequency is the frequency offset.

The third feedback signal 105c and the CW resonance tracking servo system 110g and the CW optical phase lock loop 110e lock the carrier frequency of the first optical signal 111a emitted by the CW slave optical source 110c to a resonant frequency or to a frequency that is offset from a CW resonant frequency of the optical resonator by a fixed offset frequency. The CW resonant frequency equals p multiplied by a free spectral range (FSR) of the optical resonator, where p is an integer. In some embodiments, the carrier frequency of the first optical signal 111a is locked to p times FSR, or in some embodiments it is locked to (p + ½) ^{∗} FSR.

The second feedback signal 105b, the CCW resonance tracking servo system 110h, and CCW phase lock loop 110f lock the carrier frequency of the CCW optical signal 103b emitted by the CCW slave optical source 110d to a resonant frequency or to a frequency that is offset from a CCW resonant frequency of the optical resonator by a fixed offset frequency. The CCW resonant frequency equals m multiplied by a free spectral range (FSR) of the optical resonator, where m is an integer. In some embodiments, the carrier frequency of the CCW optical signal 103b is locked to m times FSR, or in some embodiments it is locked to (m + ½) ^{∗} FSR. In one embodiment, q, p, and m are different integer numbers.

When the CW and CCW carrier frequencies are both locked to offset frequencies, the frequency offsets from optical resonator resonant frequencies are substantially equal; hence, the difference between the carrier frequencies of the first optical signal 111a and the CCW optical signal 103b are equal to Δf as described above, and rotation rate can be derived from Δf as described above.

In one embodiment, the frequency offsets of the first optical signal 111a and the CCW optical signal 103b are substantially zero frequency. In another embodiment, each frequency offset is substantially one half of a free spectral range of the optical resonator. In all embodiments, the first optical signal 111a, the second optical signal 111b, and CCW optical signal 103b are frequency modulated, e.g. by frequency modulating respectively the CW slave optical source 110c, the master optical source 110b, and the CCW slave optical source 110d, to determine optical resonator resonant frequencies. In one embodiment, modulation frequencies for the CW slave optical source 110c, the master optical source 110b, and the CCW slave optical source 110d are all different, so that the CCW resonance tracking servo system 110h, the CW resonance tracking servo system 110g, and the PDH servo system 110a may distinguish detected optical signals from each of the CW slave optical source 110c, the master optical source 110b, and the CCW slave optical source 110d. The frequency modulation causes each of the first optical signal 111a, the second optical signal 111b, and the CCW optical signal 103b to have a spectrum of frequencies centered about a corresponding carrier frequency.

In embodiments where the carrier frequencies of the first optical signal 111a and the CCW optical signal 103b, respectively emitted by the CW slave optical source 110c and the CCW slave optical source 110d, are locked to a frequency offset of substantially one half free spectral range from a resonant frequency of the optical resonator in the CW and CCW directions respectively, the odd sidebands of the CW slave optical source 110c and the CCW slave optical source 110d are locked onto resonant frequencies in the CW and CCW directions respectively. This condition is substantially the same for measuring rotation rate as the case of locking CW and CCW slave optical source carrier frequencies to CW and CCW resonant frequencies of the optical resonator.

In one embodiment, the carrier frequencies of first optical signal 111a, the second optical signal 111b, and the CCW optical signal 103b are controlled as follows. The carrier frequency of the second optical signal 111b is locked to a resonance or an offset frequency corresponding to the CW direction of the optical resonator as shown in Figure 1. The photodetector PD1 106a detects an incident optical signal, and generates the corresponding first feedback 105a which is provided to the PDH servo system 110a. The PDH servo system 110a is responsive to a frequency component in first feedback signal 105a that is related to the frequency of modulation applied to the carrier frequency of the master optical source 110b. Portions of the second optical signal 111b, emitted by the master optical source 110b, are respectively coupled to the CW optical phase lock loop 110e and the CCW optical phase lock loop 110f. A portion of the first optical signal 111a, emitted by the CW slave optical source 110c, and a portion of the CCW optical signal 103b, emitted by the CCW slave optical source 110d, are respectively coupled to the CW phase lock loop 110e and the CCW phase lock loop 1 10f. The carrier frequency of the first optical signal 111a is locked to the carrier frequency of the second optical signal 111b within a tunable difference frequency of f₁ by the CW optical phase lock loop 110e. The carrier frequency of the CCW optical signal is locked to the master carrier frequency within a tunable difference frequency of f₂ by the CCW optical phase lock loop 1 10f. A tunable difference frequency is a frequency within the tuning range of the corresponding servo system. The CW resonance tracking servo system 110g and the CCW resonance tracking servo system 110h control tunable difference frequencies f₁ and f₂ so that the carrier frequency of the first optical signal is locked to the CW resonance of the optical resonator (or at a frequency offset of substantially one half free spectral range from it) and the carrier frequency of the CCW optical signal is locked to the CCW resonance of the resonator (or to a frequency offset of substantially one half free spectral range from it). The tunable difference frequencies f₁ and f₂ are controlled such that the desirable offset of the CW and CCW carrier frequencies from resonance (e.g., substantially zero or substantially one half free spectral range) are maintained during rotation rate changes, and changing environmental conditions, *e*.*g*. temperature and vibrations, that can cause the optical resonator resonances to shift over time.

As shown in Figure 1, the first optical signal 111a emitted from the CW slave optical source 110c and the second optical signal 111b emitted from the master optical source 110b are combined in optical combiner 110i prior to being coupled to the optical processing system with at least one common polarizer 104. Optical combiner 110i may be a bulk optic beam splitter, or a fiber optical direction coupler, or another waveguide directional optical coupler.

In one embodiment, the master optical source 110b, the CW optical source 110c and the CCW optical source 110d each respectively comprise a LASER. Each optical source may include two or more optical outputs provided, e.g., to the optical resonator and optical phase lock loop(s) and implemented with an optical splitter. One or more optical sources may include a phase modulator to frequency modulate respective LASER(s). One or more optical sources may include intensity (or amplitude) modulators to compensate for phase modulation to amplitude modulation noise in phase modulator(s), to equalize the amplitude levels of the baseband component emitted by the slave optical sources, and to stabilize the second optical signal 111b emitted by the master optical source 110b. Each optical source may include optical isolators to prevent leakage of undesired signal into such sources. In another embodiment, the PDH servo system 110a, the CW resonance tracking servo system 110g, and the CCW resonance tracking servo system 110h are respectively implemented with electronic circuitry.

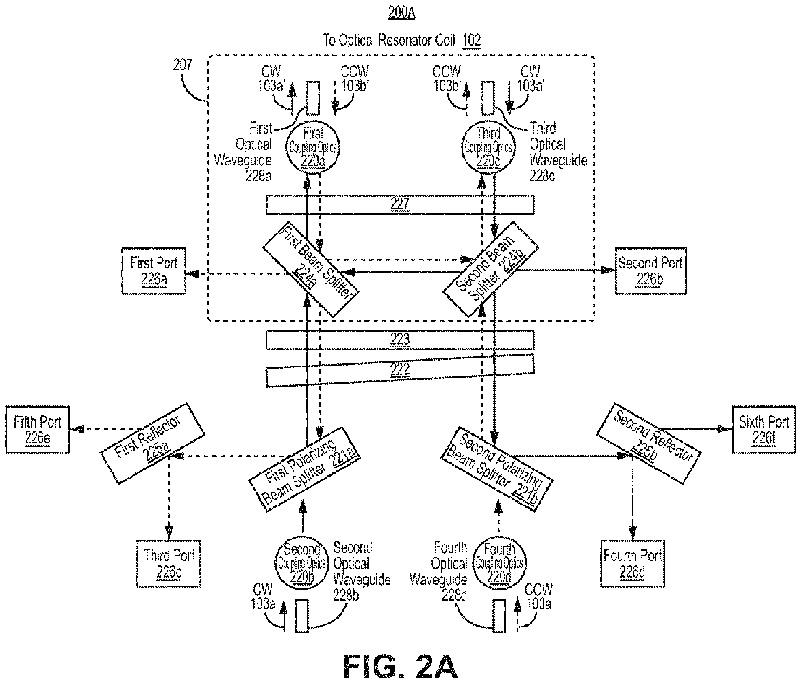

Figure 2A illustrates one embodiment of the optical processing system with at least one common polarizer 200A. Embodiments of illustrated optical processing systems with at least one common polarizer illustrated herein may also be referred to as "optical benches". However, alternatively, more or fewer components of the optical processing systems 200A, 200B may be included in the corresponding optical bench.

The illustrated optical processing system with at least one common polarizer 200A comprises a first optical waveguide 228a, a second optical waveguide 228b, a third optical waveguide 228c, a fourth optical waveguide 228d, a first coupling optics 220a, a second coupling optics 220b, a third coupling optics 220c, a fourth coupling optics 220d, a common polarizer 227, a first polarizing beam splitter 221a, a second polarizing beam splitter 221b, a common Faraday rotator 222, a common half wave plate 223, a first beam splitter 224a, a second beam splitter 224b, a first reflector 225a, a second reflector 225b, a first port 226a, a second port 226b, a third port 226c, and a fourth port 226d.

Each of the optical waveguides 228a, 228b, 228c, 228d may be an optical fiber or a planar, e.g. silicon, waveguide. Each of the coupling optics 220a, 220b, 220c, 220d may be a ball lens or a gradient index lens.

The first reflector 225a and the second reflector 225b may be a mirror, or any other device that substantially reflects an optical signal; for example, the first reflector 225a and the second reflector 226a may each be a beam splitter, e.g. reflecting about ninety seven percent of incident optical power and transmitting about three percent of the incident optical power. If a reflector is a beam splitter, then optionally it is a non-polarizing beam splitter.

Optionally, for example, if one or both of the reflectors 225a, 225b are beam splitters, then an optical signal is transmitted from a beam splitter to a unique port, *e.g.* the fifth port 226e and/or the sixth port 226f which include or are coupled to photodetector, e.g. a photodiode. The transmitted optical signal and the corresponding electrical signal, respectively incident upon a corresponding photodetector and generated by the corresponding photodetector, can be used to assess the power level of an optical signal circulating in the resonator, *e*.*g*. the optical resonator coil 102.

The first port 226a, the second port 226b, the third port 226c, the fourth port 226d, the fifth port 226e, and the sixth port 226f may each be detector collection optics, *e.g.* a mirror, a prism, or a coupling optics (such as a ball lens) and an optical waveguide, and/or a prism, or a photodetector, *e*.*g*. an angled photodetector to minimize reflections; for pedagogical purposes, detector collection optics coupled to external photodiodes are exemplified herein. The mirrors referred to herein may be fabricated from dielectric(s) and/or metal(s).

The first port 226a is either detector collection optics coupled to the first photodetector (PD1), or the first photodetector (PD1). The second port 226b is either detector collection optics coupled to the fourth photodetector PD4, or the fourth photodetector PD4. As previously stated, the fourth photodetector (PD4) (not shown in Figure 1) is optional. In the event the fourth photodetector (PD4) is not used, optical absorbing or deflecting material may be used in lieu of the second port 226b or the fourth photodetector (PD4). The third port 226c is either detector collection optics coupled to the second photodetector (PD2), or the second photodetector (PD2). The fourth port 226d is either detector collection optics coupled to the third photodetector (PD3), or the third photodetector (PD3).

In one embodiment, the resonator loop closure optics system 207 comprises the first optical waveguide 228a, the third optical waveguide 228c, the first coupling optics 220a, the third coupling optics 220c, the common polarizer 227, the first beam splitter 224a, and the second beam splitter 224b. The polarized CW optical signal 103a' and the polarized CCW optical signal 103b' propagate through the foregoing components, including the common polarizer 227, as those signals propagate around the optical resonator. The optical resonator is comprised of the optical resonator coil 102 and the resonator loop closure optics system 107.

The second optical waveguide 228b and the fourth optical waveguide 228d are configured to be optically coupled to the coherent light source system 110, and respectively receive the CW optical signal 103a and the CCW optical signal 103b. Optionally, the CW optical signal 103a and the CCW optical signal 103b received by the second optical waveguide 228b and the fourth optical waveguide 228d are polarized, *e.g.* S polarized or P polarized. For pedagogical purposes, the CW optical signal 103a and the CCW optical signal 103b received by the second optical waveguide 228b and the fourth optical waveguide 228d will be subsequently described as S polarized optical signals.

The first optical waveguide 228a and the third optical waveguide 228c are configured to be coupled to the optical resonator coil 102. The first optical waveguide 228a is configured to transmit to and receive from the optical resonator coil 102 respectively a polarized CW optical signal 103a' and a polarized CCW optical signal 103b'. The third optical waveguide 228c is configured to respectively transmit to and receive from the optical resonator coil 102 a polarized CCW optical signal 103b' and a polarized CW optical signal 103a'.

The second coupling optics 220b and the fourth coupling optics 220d respectively receive the CW optical signal 103a and the CCW optical signal 103b from the second optical waveguide 228b and the fourth optical waveguide 228d, collimate, and focus the CW optical signal 103a and the CCW optical signal 103b respectively on the first polarizing beam splitter 221a and the second polarizing beam splitter 221b.

The first polarizing beam splitter 221a and the second polarizing beam splitter 221b highly reflect an optical signal having a first polarization, e.g. S or P polarization, and highly transmit (or pass) an optical signal having a second polarization, respectively P or S polarization. In one embodiment, the reflectance coefficient is greater than ninety nine percent. In another embodiment, the transmittance coefficient is greater than ninety eight percent. In a further embodiment, the transmittance coefficient is greater than ninety seven percent. For pedagogical reasons and optionally, the CW optical signal 103a and the CCW optical signal 103b are each substantially linearly polarized being S polarized.

Polarizer, as used herein, means an optical filter that transmits substantially only optical signals of a specific polarization, *e*.*g*. for linear polarization: vertical or horizontal polarization, or S or P polarization. The term common polarizer, as used herein, means a single polarizer having sufficient spatial dimensions to polarize each of at least two spatially distinct optical signals. For linear polarization, the common polarizer 227 transmits substantially only either S or P polarized light, and substantially attenuates respectively P or S polarized light. For pedagogical reasons, the common polarizer 227-will be illustrated as transmitting substantially respectively an S polarized CW optical signal and an S polarized CCW optical signal. Thus, the common polarizer 227 respectively substantially attenuate a P polarized CW optical signal and a P polarized CCW optical signal, *e.g.* by about forty to sixty decibels with respect to the corresponding S polarized optical signal. The attenuation provided by the common polarizer 227 is desirable because CW optical signal 103a and the CCW optical signal 103b have undesired polarization components, *e*.*g*. P polarization components, with power levels which are only twenty to twenty five decibels below the power levels of desired polarization components, *e*.*g*. S polarization components. The undesired polarization components give rise to polarization mismatch, and bias error.

The S polarized CW optical signal and the S polarized CCW optical signal, from the first polarizing beam splitter 221a and the second polarizing beam splitter 221b, pass through the common Faraday rotator 222 and the common half wave plate 223. The common Faraday rotator 222 and the common half wave plate 223 respectively rotate the polarization of the S polarized optical signals (propagating from the first polarizing beam splitter 221a and the second polarizing beam splitter 221b) by forty-five degrees and then by negative forty-five degrees. As a result, the polarization of the S polarized optical signal is not changed. The term common Faraday rotator, as used herein, means a single Faraday rotator having sufficient spatial dimensions to act as a Faraday rotator for each of at least two distinct optical signals. The term common half wave plate, as used herein, means a single half wave plate having sufficient spatial dimensions to act as a half wave plate for each of at least two spatially distinct optical signals.

The S polarized CW optical signal and the S polarized CCW optical signal, from the common half wave plate 223, are respectively incident upon the first beam splitter 224a and the second beam splitter 224b. In one embodiment, the first beam splitter 224a and the second beam splitter 224b do not discriminate based upon polarization, *i.e.* are non-polarizing. The first beam splitter 224a and the second beam splitter 224b reflect first portions of respectively of the S polarized CW optical signal 103a and the S polarized CCW optical signal 103b, incident upon corresponding beam splitters, respectively to the first port 226a and the second port 226b. The first portions comprise a relatively large percentage, *e*.*g*. about ninety-seven percent of the power of the respective optical signals incident upon the beam splitters.

The first beam splitter 224a and the second beam splitter 224b serve as the input and output couplers for the resonator closure optics 207. The portions of respectively the_S polarized CW optical signal and the S polarized CCW optical signal transmitted from the first beam splitter 224a and the second beam splitter 224b enter the optical resonator, *e*.*g*. the resonator loop closure optics system 207. Specifically, the first beam splitter 224a and the second beam splitter 224b transmit second portions of respectively the S polarized CW optical signal and the S polarized CCW optical signal to respectively the common polarizer 227, and then the first coupling optics 220a and the third coupling optics 220c. The second portions comprise a relatively small percentage, e.g. between one and ten percent (such as about three percent), of the power of the respective optical signals incident upon the beam splitters. The S polarized CW optical signal and the S polarized CCW optical signal respectively emitted from the first coupling optics 220a and the third coupling optics 220c are received, or optically couple into, respectively the first optical waveguide 228a and the third optical waveguide 228c. The first optical waveguide 228a and the third optical waveguide 228c are optically coupled to the optical resonator coil 102. Thus, the polarized optical signals flow through the first optical waveguide 228a and the third optical waveguide 228c as illustrated in Figure 2A.

As a result of using the common polarizer 227, the polarized CW optical signal 103a' and the polarized CCW optical signal 103b' propagating around the optical resonator, *e*.*g*. the optical resonator coil 102, pass through a single polarizer (the common polarizer 227). Thus, polarization mismatches between the polarization Eigenstates inside the optical resonator of the RFOG, and the polarizations of respective optical signals being injected into the optical resonator of the RFOG are reduced. As a result, RFOG bias error is reduced.

The S polarized CW optical signal 103a' propagating through the optical resonator coil 102 passes through the third optical waveguide 228c and the third coupling optics 220c. Upon becoming passing through the common polarizer 227, the second beam splitter 224b transmits a first portion of the S polarized CW optical signal 103a' through the common half wave plate 223, and the common Faraday rotator 222, to the second polarizing beam splitter 221b. The first portion comprises a relatively small percentage, *e*.*g*. between one to ten percent (such as about three percent), of the power of the optical signal incident upon the second beam splitter 224b. A second portion of the S polarized CW optical signal 103a' is reflected by the second beam splitter 224b to the first beam splitter 224a, the first coupling optics 220a, the first optical waveguide 228b, and back to the optical resonator coil 102.

When the first portion of the S polarized CW optical 103a' signal propagates from the second beam splitter 224b and passes through the common half wave plate 223, its polarization is rotated by forty-five degrees. When the first portion of the S polarized rotated CW optical signal passes through the common Faraday rotator 222, its polarization is rotated by another forty-five degrees (for a total of ninety degrees). As a result, the first portion of the S polarized CW optical signal is transformed into a P polarized CW optical signal. The P polarized CW optical signal is reflected by the second polarizing beam splitter 221b and is incident upon the second reflector 225b. The second reflector 225b reflects a relatively large percentage, e.g. ninety seven percent to ninety nine percent, of the power of the P polarized CW optical signal incident upon the second reflector 225b. The reflected, P polarized CW optical signal is incident upon the fourth port 226d

The S polarized CCW optical signal propagating from the optical resonator coil 102 into the optical processing system with at least one common polarizer 200A is analogously processed as described above but by the first optical waveguide 228a, the first coupling optics 220a, the first beam splitter 224a, the second beam splitter 224b, the common polarizer 227, the third coupling optics 220c, the third optical waveguide 228c, the half wavelength plate 223, the common Faraday rotator 222, the first polarizing beam splitter 221a, the first reflector 225a, and the third port 226c.

The first reflector 225a and the second reflector are optional. In another embodiment, the third port 226c can be directly optically coupled to the first polarizing beam splitter 221a; the fourth port 226dcan be directly optically coupled to the second polarizing beam splitter 221b.

Figure 2A illustrates the fifth port 226e and the sixth port 226f which are each optional. To utilize either or both of these optional ports, the corresponding reflector(s) are beam splitter(s) rather than mirror(s). For example, a portion of the CW optical signal 103a' circulating in the resonator, *e*.*g*. the optical resonator coil 102, may be transmitted through the second reflector 225b to the sixth port 226f. A portion of the CCW optical signal 103b' circulating in the resonator, *e*.*g*. the optical resonator coil 102, may be transmitted through the first reflector 225a to the fifth port 226e. Each photodetector in, or optically coupled to, each of the fifth port 226e and sixth port 226f generates electrical signal respectively corresponding to power level of the CCW optical signal 103b' and the CW optical signal 103a' circulating in the resonator, *e*.*g*. the optical resonator coil 102. The electrical signals can be used as feedback signals to control the optical power levels of the CCW optical signal 103b' and the CW optical signal 103a', for example by adjusting the attenuation levels of optical attenuators in the optical paths of the CCW optical signal 103b' and the CW optical signal 103a', *e.g.* in the coherent light source system 110.

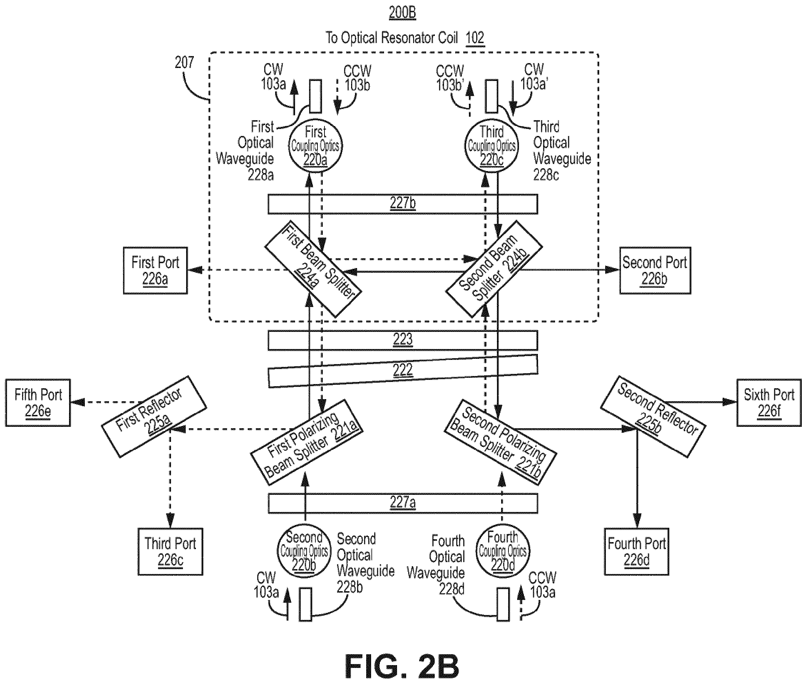

Figure 2B illustrates another embodiment of an optical processing system with at least one common polarizer 200B. This other embodiment is similar to the embodiment illustrated in Figure 2A. However, in this embodiment, a first common polarizer 227a is located between the second coupling optics 220b and fourth coupling optics, and the first polarizing beam splitter 221a and the second polarizing beam splitter 221b. Only the CW optical signal 103a and the CCW optical signal 103b emitted respectively by the second coupling optics 220b and the fourth coupling optics 220d pass through, and are polarized, by the first common polarizer 227a.

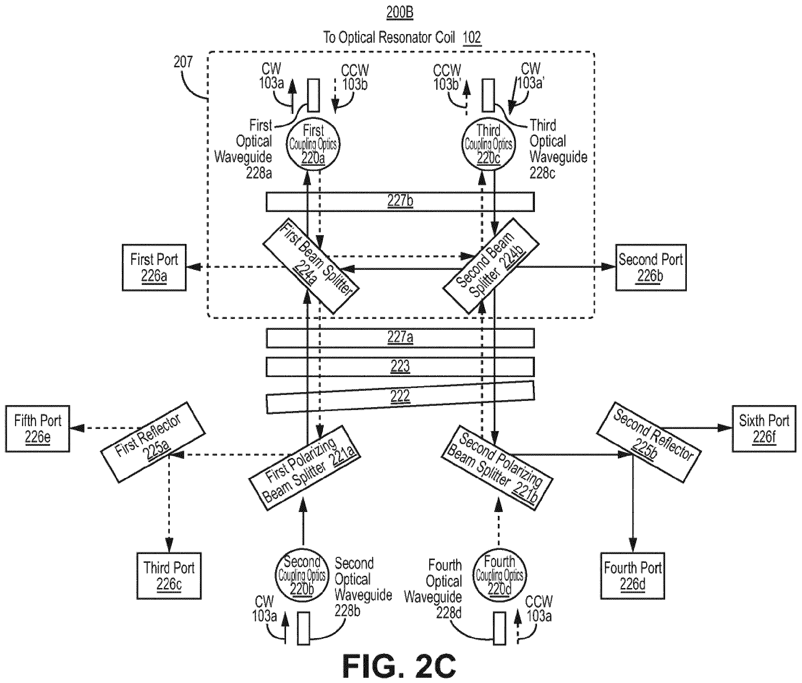

Figure 2C illustrates a further embodiment of an optical processing system with at least one common polarizer. This further embodiment is similar to the embodiment illustrated in Figure 2B. However, in this embodiment, the first common polarizer 227a is located between the first beam splitter 224a and the second beam splitter 224b, and the common Faraday rotator 222 or the common half wave plate 223.

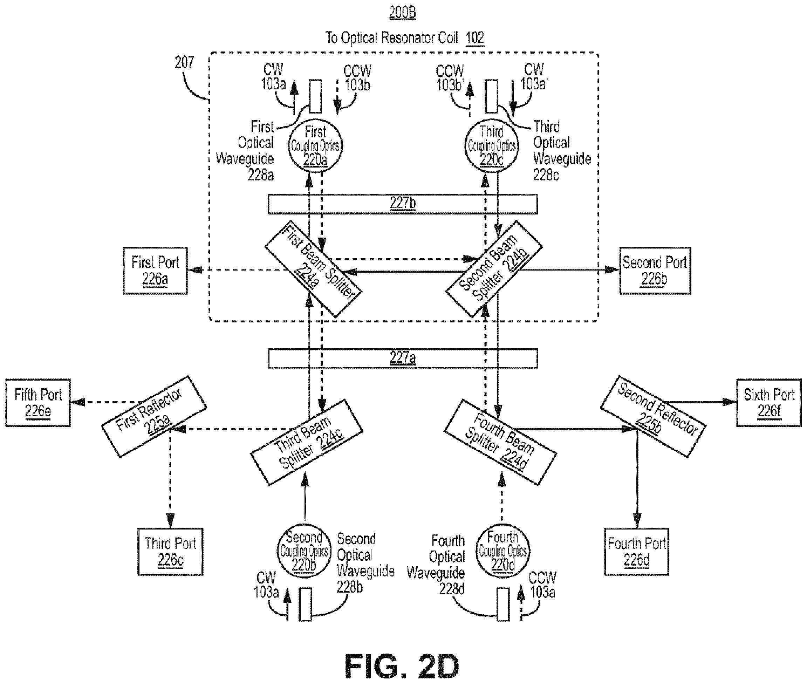

Figure 2D illustrates yet another embodiment of an optical processing system with at least one common polarizer. This yet another embodiment is similar to the embodiment illustrated in Figure 2C, except no common Faraday rotator 222 and no common half wave plate 223 are used. Further, the first polarizing beam splitter 221a and the second polarizing beam splitter 221b are replaced by a third beam splitter 224c and a fourth beam splitter 224d. Optionally, two optical circulators, each of which utilizes a polarizing beam splitter, are respectively externally coupled to the second optical waveguide 228b and the fourth optical waveguide 228d.

In other embodiments, the above described S and P polarizations in the embodiments illustrated in Figures 2A-D can be reversed. Optionally, polarization maintaining fibers in the CW optical signal 103a and the CCW optical signal propagation paths can be used in lieu of the first common polarizer 227a. Such polarization maintaining fibers may be in the optical processing system with at least one common polarizer 104 (optically coupled between the coherent light source system 110 and the first and second polarizing beam splitters 221a, 221b) or optically coupled between the optical processing system with at least one common polarizer 104 and the coherent light source system 110. A first polarization maintaining fiber is configured to couple the CW optical signal 103 to the first polarizing beam splitter 221a. The second polarization maintaining fiber is configured to couple the CCW optical signal 103b to the second polarizing beam splitter 221b. A second common polarizer 227b is located and functions like the common polarizer 227 described with respect to Figure 2.

Optical processing systems with at least one common polarizer may be implemented differently than the embodiments illustrated in Figures 2A-D. The optical processing system with at least one common polarizer illustrated in Figures 2A-D can be implemented with the common Faraday rotator and the common half wave plate in opposite order or with the faces of one of such components reversed. Further, device(s), other than optical waveguides and coupling optics may be used to couple optical signals, *e.g.* to the common polarizers.

Operation of an exemplary RFOG with an optical processing system with at least one common polarizer will now be further described. A method to diminish polarization mismatch will be exemplified.

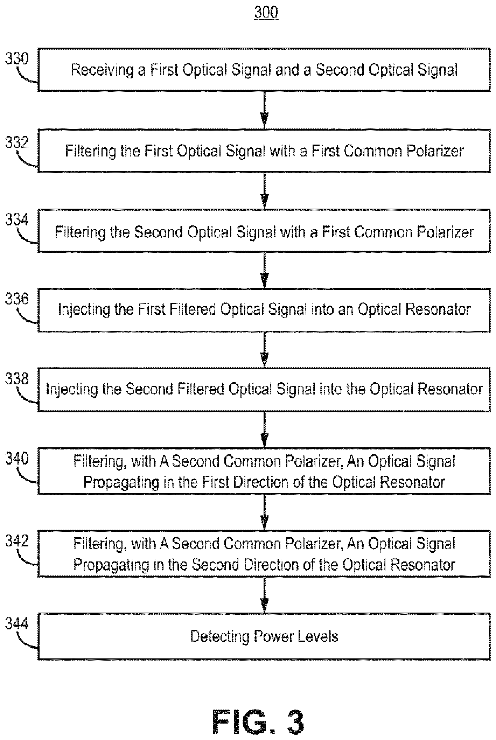

Figure 3 illustrates an exemplary method 300 of diminishing bias error in an RFOG. To the extent the method 300 shown in Figure 3 is described herein as being implemented in the system shown in Figures 1-2D, it is to be understood that other embodiments can be implemented in other ways. The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In block 330, receive a first optical signal and a second optical signal, *e*.*g*. from the coherent light source system 110. In one embodiment, each of the first optical signal and the second optical signal comprises a first polarization component, *e*.*g*. P or S polarization, and a second polarization, *e*.*g*. S or P polarization, where the first polarization component has a different polarization and a substantially larger power level than respectively the polarization and the power level of second polarization component. In another embodiment, the power level of the second polarization component is many decibels (*e.g.* 20-25 dB) less than the power level of the first polarization component.

Alternatively, the first optical signal and the second optical signal have first polarization components having different polarizations and second polarization components having different polarizations. If so, then also transform the first polarization component of the second optical signal so that it has the same polarization as the first optical signal, *e.g.* before the second optical signal is incident upon a common polarizer.

Optionally, in block 332, filter the first optical signal with a first common polarizer having a first polarization, *i.e.* to increase the relative power level of the polarization component having the first polarization with respect to the other polarization component having a different polarization. Optionally, in block 334, filter the second optical signal with the first common polarizer having a first polarization, *i.e.* to increase the relative power level of the polarization component having the first polarization with respect to the other polarization component having a different polarization. The filtering in blocks 332 and 334 is performed prior to the injection of blocks 336 and 338.

In block 336, inject the first optical signal (which optionally may have been filtered) into an optical resonator so that the first filtered optical signal propagates in a first direction through the optical resonator. In block 338, inject the second optical signal (which optionally may have been filtered) into the optical resonator so that it propagates in a second direction through the optical resonator, which is opposite to the first direction.

In block 340, filter, with a second common polarizer, an optical signal propagating in the first direction of the optical resonator. In block 342, filter, with the second common polarizer, an optical signal propagating in the second direction of the optical resonator.

Optionally, in block 344, detect the power levels of at least one of the filtered optical signal propagating in the first direction of the optical resonator and the filtered optical signal propagating in the second direction of the optical resonator.

### Example Embodiments

Example 1 includes a system, comprising: a first beam splitter; a second beam splitter; a third beam splitter optically coupled to the first beam splitter; a fourth beam splitter optically coupled to the second beam splitter; a first common polarizer optically coupled to the third beam splitter and the fourth beam splitter; and wherein the first common polarizer is further configured to be optically coupled to a first port and a second port of an optical resonator coil.
Example 2 includes the system of Example 1, further comprising a second common polarizer optically coupled to the first beam splitter and the second beam splitter.
Example 3 includes the system of any of Examples 1-2, further comprising: a first port optically coupled to the third beam splitter; a second port optically coupled to the first beam splitter; and a third port optically coupled to the second beam splitter.
Example 4 includes the system of Example 3, wherein each of the first port, the second port, and the third port comprises a photodetector.
Example 5 includes the system of any of Examples 3-4, further comprising a fourth port optically coupled to the first beam splitter; and a fifth port is optically coupled to the second beam splitter.
Example 6 includes the system of Example 5, wherein each of the fourth port and the fifth port comprises a photodetector.
Example 7 includes the system of any of Examples 5-6, wherein the fourth port and the fifth port are coupled to a coherent light source system; and wherein the coherent light source system includes at least two optical sources configured to generate a first optical signal and a second optical signal which are configured to be optically coupled to respectively the first beam splitter and the second beam splitter.
Example 8 includes the system of any of Examples 1-7, further comprising: a common Faraday rotator optically coupled to the first beam splitter and the second beam splitter; a common half wave plate optically coupled to the common Faraday rotator; and wherein the first beam splitter and the second beam splitter are each polarizing beam splitters.
Example 9 includes a system, comprising: a first beam splitter; a second beam splitter; a third beam splitter optically coupled to the first beam splitter; a fourth beam splitter optically coupled to the second beam splitter; a first common polarizer coupled to the third beam splitter and the fourth beam splitter; an optical resonator coil having a first port and a second port optically coupled to the common polarizer; a coherent light source system comprising at least two optical sources, and configured to generate a first optical signal and a second optical signal which are configured to be optically coupled respectively to the first beam splitter and the second beam splitter; and a processing system coupled to the coherent light source system.
Example 10 includes the system of Example 9, further comprising a second common polarizer optically coupled to the first beam splitter and the second beam splitter.
Example 11 includes the system of any of Examples 9-10, further comprising: a first port optically coupled to the first beam splitter; a second port optically coupled to the first beam splitter; and a third port optically coupled to the second beam splitter.
Example 12 includes the system of Example 11, wherein each of the first port, the second port, and the third port comprises a photodetector.
Example 13 includes the system of any of Examples 11-12, further comprising a fourth port optically coupled to the first beam splitter; and a fifth port is optically coupled to the second beam splitter.
Example 14 includes the system of Example 13, wherein each of the fourth port and the fifth port comprises a photodetector.
Example 15 includes the system of any of Examples 13-14, wherein the fourth port and the fifth port are coupled to the coherent light source system.
Example 16 includes the system of any of Examples 9-15, wherein the coherent light source system comprises: a first slave optical source; a second slave optical source configured to generate the second optical signal; a master optical source; a first optical phase lock loop coupled to the first slave optical source and the master optical source; a second optical phase lock loop coupled to the second slave optical source and the master optical source; a combiner coupled to the master optical source and the first slave optical source, and configured to provide the first optical signal; a first resonance tracking servo system coupled to the first optical phase lock loop; a second resonance tracking servo system coupled to the second optical phase lock loop; and a Pound-Drever-Hall servo system coupled to the master optical source.
Example 17 includes the system of any of Examples 9-16, further comprising: a common Faraday rotator optically coupled to the first beam splitter and the second beam splitter; a common half wave plate optically coupled to the common Faraday rotator; and wherein the first beam splitter and the second beam splitter are each polarizing beam splitters.
Example 18 includes a method, comprising: receiving a first optical signal and a second optical signal; injecting the first optical signal into an optical resonator so that the first optical signal propagates in a first direction through the optical resonator; injecting the second optical signal into the optical resonator so that the second optical signal propagates in a second direction through the optical resonator, which is opposite to the first direction; filtering an optical signal propagating in the first direction of the optical resonator with a first common polarizer, where the first common polarizer has a first polarization; and filtering an optical signal propagating in the second direction of the optical resonator with the first common polarizer.
Example 19 includes the method of Example 18, further comprising detecting the power levels of at least one of: the filtered first optical signal propagating in the first direction of the optical resonator and the filtered second optical signal propagating in the second direction of the optical resonator.
Example 20 includes the method of any of Examples 18-19, further comprising: filtering the first optical signal with a second common polarizer prior to injecting the first optical signal into the optical resonator, where the second common polarizer has the first polarization; and filtering the second optical signal with a second common polarizer prior to injecting the first optical signal into the optical resonator.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and the claims, such terms are intended to be inclusive in a manner similar to the term "comprising." The term "at least one of' is used to mean one or more of the listed items can be selected. As used herein, the term "one or more of' with respect to a listing of items such as, for example, A and B or A and/or B, means A alone, B alone, or A and B. The term "at least one of' is used to mean one or more of the listed items can be selected.

The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

Terms of relative position as used in this application are defined based on a plane parallel to, or in the case of the term coplanar - the same plane as, the conventional plane or working surface of a device, wafer, or substrate, regardless of orientation. The term "horizontal" or "lateral" as used in this application are defined as a plane parallel to the conventional plane or working surface of a device, wafer, or substrate, regardless of orientation. The term "vertical" refers to a direction perpendicular to the horizontal. Terms such as "on," "side" (as in "sidewall"), "higher," "lower," "over," "top," and "under" are defined with respect to the conventional plane or working surface being on the top surface of device, wafer, or substrate, regardless of orientation. The term "coplanar" as used in this application is defined as a plane in the same plane as the conventional plane or working surface of a device, wafer, or substrate, regardless of orientation.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system, comprising:
a first beam splitter (221a, 224c);
a second beam splitter (221b, 224d);
a third beam splitter (224a) optically coupled to the first beam splitter;
a fourth beam splitter (224b) optically coupled to the second beam splitter;
a first common polarizer (227, 227b) optically coupled to the third beam splitter and the fourth beam splitter; and
wherein the first common polarizer is further configured to be optically coupled to a first resonator port and a second resonator port of an optical resonator coil (102).

2. The system of claim 1, further comprising a second common polarizer (227b) optically coupled to the first beam splitter and the second beam splitter.

3. The system of claim 1, further comprising:
a first port optically (226a) coupled to the third beam splitter;
a second port (226c) optically coupled to the first beam splitter; and
a third port (226d) optically coupled to the second beam splitter.

4. The system of claim 3, further comprising a fourth port (226e) optically coupled to the first polarizing beam splitter; and
a fifth port (226f) is optically coupled to the second beam splitter.

5. The system of claim 4, wherein the fourth port and the fifth port are coupled to a coherent light source system (110); and
wherein the coherent light source system includes at least two optical sources configured to generate a first optical signal (103a) and a second optical signal (103b) which are configured to be optically coupled to respectively the first beam splitter and the second beam splitter.

6. The system of claim 1, further comprising:
a common Faraday rotator (222) optically coupled to the first beam splitter and the second beam splitter;
a common half wave plate (223) optically coupled to the common Faraday rotator; and
wherein the first beam splitter and the second beam splitter are each polarizing beam splitters.

7. The system of claim 1, further comprising coherent light source system (110) including at least two optical sources configured to generate a first optical signal and a second optical signal which are configured to be optically coupled to respectively the first beam splitter and the second beam splitter; and
a processing system (108) coupled to the coherent light source system.

8. A method, comprising:
receiving a first optical signal and a second optical signal (330);
injecting the first optical signal into an optical resonator so that the first optical signal propagates in a first direction through the optical resonator (336);
injecting the second optical signal into the optical resonator so that the second optical signal propagates in a second direction through the optical resonator, which is opposite to the first direction (338);
filtering an optical signal propagating in the first direction of the optical resonator with a first common polarizer, where the first common polarizer has a first polarization (340); and
filtering an optical signal propagating in the second direction of the optical resonator with the first common polarizer (342).

9. The method of claim 8, further comprising detecting the power levels of at least one of: the filtered first optical signal propagating in the first direction of the optical resonator and the filtered second optical signal propagating in the second direction of the optical resonator (344).

10. The method of claim 8, further comprising:
filtering the first optical signal with a second common polarizer prior to injecting the first optical signal into the optical resonator, where the second common polarizer has the first polarization (332); and
filtering the second optical signal with a second common polarizer prior to injecting the first optical signal into the optical resonator (334).
